# EUROPEAN PATENT APPLICATION

(11) **EP 3 499 336 A1**
(43) Date of publication of application: **19.06.2019**
(21) Application number: 17206948.6
(22) Date of filing: 13.12.2017
(51) Int. Cl.: G06F 1/16, H04M 1/725, H02J 50/10

(54) **INTERACTIVE PHONE CASE**

(71) Applicant: Vestel Elektronik Sanayi ve Ticaret A.S., 45030 Manisa (TR)
(72) Inventor: KURALAY, Fatih, 45030 Manisa (TR); DEMIR, Fatih, 45030 Manisa (TR)
(74) Representative: Ascherl, Andreas

(57) **Abstract**

The present invention refers to a system for allowing a user to control a mobile device (3) externally. The system comprises a case cover (2) and an external touch pad (1). The case cover (2) is provided to cover the mobile device (3). The external touch pad (1) is attached to the case cover (2). The external touch pad (1) is configured to connect and communicate to the mobile device (3) through a wireless communication means. The external touch pad (1) is configured to receive touch inputs from the user and allows the user to control the mobile device (3) through the touch inputs provided therein. The wireless communication means is implemented in both the touch pad (1) and the mobile device (3) to establish a connection and communication between the mobile device (3) and the external touch pad (1). The external touch pad (1) is capable of sending touch information to the mobile device (3) based on the received touch inputs without hiding display of the mobile device.

## Description

This invention refers to a system for allowing a user to control a mobile device externally according to claim 1.

### Background of the Invention

Most of the mobile devices are using touch panel in their display. While navigating through the touch panels, some part of the image in display is hidden to the user. Hence the user can control the touch panel with his/her finger. Since this is also an obstacle for the user while viewing the display. However, to solve this situation some mobile devices disclose a system with a touch button provided in a rear side of the touch panel of the mobile device. But still it is difficult for the user to coordinate the navigation and the corresponding response in the display.

The prior arts does not provide a full screen visibility while navigating the mobile device. A lot of screen area gets invisible when a user touches the screen with his/her fingers. Further, the user finds it difficult to coordinate the navigation and the corresponding response in the display of the prior art.

### Object of the Invention

It is therefore the object of the present invention to provide a system for allowing a user to control a mobile device externally without hiding a screen area for viewing content on the screen as compared to the known system.

### Description of the Invention

The before mentioned object is solved by a system for allowing a user to control a mobile device externally according to claim 1. The system according to the present invention preferably comprises of a case cover and an external touch pad. The case cover is provided to cover the mobile device. The external touch pad is attached to the case cover. The external touch pad is configured to connect and communicate to the mobile device through a wireless communication means. Further, the external touch pad is configured to receive touch inputs from the user and to allow the user to control the mobile device through the touch inputs provided therein.

This solution is beneficial since such a system allows a user to control a mobile device externally without hiding a screen area while controlling and viewing the device using his/her fingers. Further, the system provides the user a better coordination with the display while navigating the mobile device.

Further preferred embodiments are subject-matter of dependent claims and/or of the following specification parts.

According to a preferred embodiment of the present invention, the wireless communication means is implemented in both the touch pad and the mobile device to establish a connection and communication between the mobile device and the external touch pad. Further, the wireless communication means includes but is not limited to Bluetooth, NFC and similar techniques. The external touch pad is provided at an internal peripheral flat surface of the case cover. The external touch pad is capable of sending touch information to the mobile device based on the received touch inputs. The external touch pad function is disabled when the case cover and/or the mobile device is closed. The mobile device is configured to disable the external touch pad function. The external touch pad extracts an electric power from the mobile device via wireless charging coils provided in both the case cover and the mobile device.

According to a further embodiment of the present invention, the wireless charging coil provided in the case cover extracts the electric power electromagnetically from the wireless charging coil provided in the mobile device by means of mutual inductance. The electric power extracted from the mobile device is transferred to the external touch pad via the case cover through a plurality of power cables. The wireless charging coil provided in the case cover connects the external touch pad through the power cables.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates an exemplary model of a case cover with an external touch pad attached to a mobile device in an open position, according to the present invention; and
- Fig. 2: illustrates an exemplary model of a cross sectional view of the case cover attached to the mobile device, according to the present invention.

### Detailed Description of the Drawings

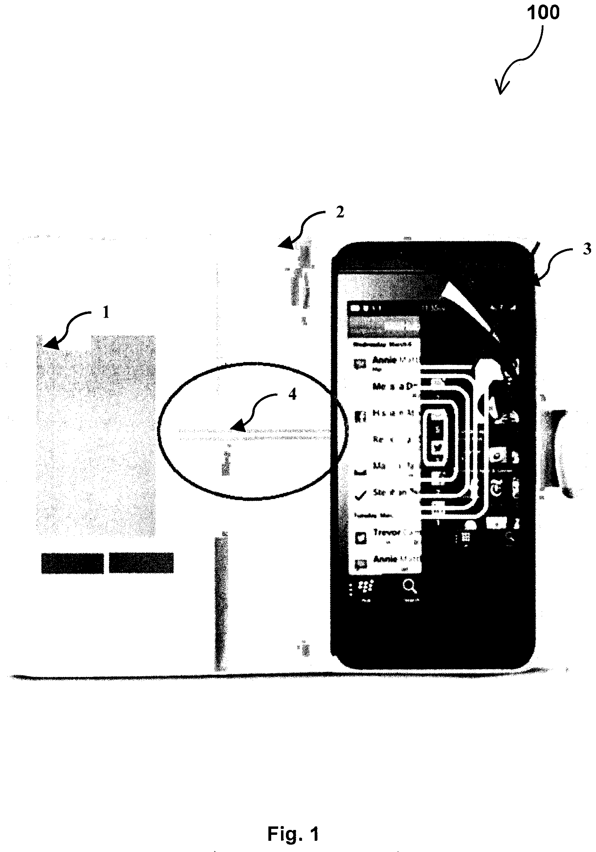

Fig. 1 illustrates an exemplary model 100 of a case cover 2 with an external touch pad 1 attached to a mobile device 3 in an open position, according to the present invention. The system according to the present invention preferably comprises of a case cover 2 and an external touch pad 1. The case cover 2 is provided to cover the mobile device 3. The case cover 2 covers the mobile device 3 in a flip flap manner. The external touch pad 1 is attached to the case cover 2. The external touch pad 1 attached to an internal peripheral flat surface is available in a left side of the case cover 2. The external touch pad 1 function is disabled when the case cover 2 and/or the mobile device 3 is closed. The mobile device 3 is configured to disable the external touch pad 1 function. The external touch pad 1 is configured to connect and communicate to the mobile device 3 through a wireless communication means. Further, the external touch pad 1 is configured to receive touch inputs from the user and to allow the user to control the mobile device 3 through the touch inputs provided therein.

The external touch pad 1 extracts an electric power from the mobile device 3 via wireless charging coils (shown in fig .2) provided in both the case cover 2 and the mobile device 3. The electric power extracted from the mobile device 3 is transferred to the external touch pad 1 via the case cover 2 through a plurality of power cables 4.

The mobile device 3 includes but is not limited to a smart phone, a touch screen communication device, a touch screen information processing system, a touch screen enabled portable communication devices and similar devices.

This solution is beneficial since such a system for allowing a user to control a mobile device 3 externally without hiding a screen area when a user touches the screen with his/her fingers. Further, the system provides the user a better coordination with the display while navigating the mobile device 3.

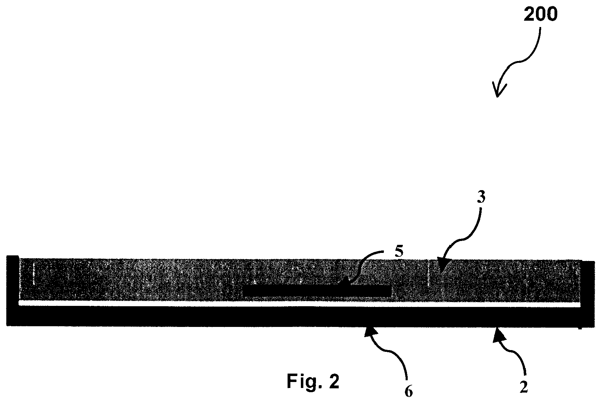

Fig. 2 illustrates an exemplary model of a cross sectional view 200 of the case cover 2 attached to the mobile device 3, according to the present invention. According to a preferred embodiment of the present invention the wireless communication means is implemented in both the touch pad 1 and the mobile device 3 to establish a connection and communication between the mobile device 3 and the external touch pad 1. Furthermore, the wireless communication means includes but is not limited to Bluetooth, NFC and similar techniques. The external touch pad 1 is provided at an internal peripheral flat surface of the case cover 2. The external touch pad 1 is capable of sending touch information to the mobile device 3 based on the received touch inputs.

According to a preferred embodiment of the present invention, the wireless charging coil 6 provided in the case cover 2 extracts the electric power electromagnetically from the wireless charging coil 5 provided in the mobile device 3 by means of mutual inductance. The electric power extracted from the mobile device 3 is transferred to the external touch pad 1 via the case cover 2 through a plurality of power cables 4. The wireless charging coil 6 provided in the case cover 2 connects the external touch pad 1 through the power cables 4.

For example, when the mobile device 3 activates the external touch pad 1, the charging coil 5 provided in the mobile device 3 energizes the charging coil 6 provided in the case cover 2. The energy is transferred to the touch pad 1 through the power cables 4. Further, a navigation detected at the touch pad 1 is transferred as the touch input to the mobile device 3 and the corresponding response for the touch input displayed in the mobile device 3.

Thus, the system for allowing a user to control a mobile device 3 externally is achieved through the external touch pad 1 provided at the case cover 2. The system comprises a case cover 2 and an external touch pad 1. The case cover 2 is provided to cover the mobile device 3. The external touch pad 1 is attached to the case cover 2. The external touch pad 1 is configured to connect and communicate to the mobile device 3 through a wireless communication means. The external touch pad 1 is configured to receive touch inputs from the user and allows the user to control the mobile device 3 through the touch inputs provided therein. The wireless communication means are implemented in both the touch pad 1 and the mobile device 3 to establish a connection and communication between the mobile device 3 and the external touch pad 1. The external touch pad 1 is capable of sending touch information to the mobile device 3 based on the received touch inputs.

### List of reference numbers

- 1: touch pad
- 2: case cover
- 3: mobile device
- 4: power cables
- 5: charging coil provided in the mobile device
- 6: charging coil provided in the case cover

## Claims

1. A system for allowing a user to control a mobile device externally, wherein the system comprises
a case cover (2) provided to cover the mobile device (3),
**characterized in**
an external touch pad (1) attached to the case cover (2),
wherein the external touch pad (1) is configured to connect and communicate to the mobile device (3) through a wireless communication means,
and wherein the external touch pad (1) is configured to receive touch inputs from the user and allows the user to control the mobile device (3) through the touch inputs provided therein.

2. The system as claimed in claim 1, wherein the wireless communication means is implemented in both the touch pad (1) and the mobile device (3) to establish a connection and communication between the mobile device (3) and the external touch pad (1).

3. The system as claimed in claim 1, wherein the wireless communication means includes Bluetooth and NFC.

4. The system as claimed in claim 1, wherein the external touch pad (1) is provided at an internal peripheral flat surface of the case cover (2).

5. The system as claimed in claim 1, wherein the external touch pad (1) is capable of sending touch information to the mobile device (3) based on the received touch inputs.

6. The system as claimed in claim 1, wherein the external touch pad (1) function is disabled when the case cover (2) and/or the mobile device (3) is closed.

7. The system as claimed in claim 1, wherein the mobile device (3) is configured to disable the external touch pad (1) function.

8. The system as claimed in claim 1, wherein the external touch pad (1) extracts an electric power from the mobile device (3) via wireless charging coils (6, 5) provided in both the case cover (2) and the mobile device (3).

9. The system as claimed in claim 8, wherein the wireless charging coil (6) provided in the case cover (2) extracts the electric power electromagnetically from the wireless charging coil (5) provided in the mobile device (3) by means of mutual inductance.

10. The system as claimed in claim 9, wherein the electric power extracted from the mobile device (3) is transferred to the external touch pad (1) via the case cover (2) through a plurality of power cables (4).

11. The system as claimed in claim 10, wherein the wireless charging coil (6) provided in the case cover (2) connects the external touch pad (1) through the power cables (4).
